# EUROPÄISCHE PATENTSCHRIFT

(11) **EP 2 728 066 B1**
(45) Veröffentlichungstag und Bekanntmachung des Hinweises auf die Patenterteilung: **12.08.2020**
(21) Anmeldenummer: 12007422.4
(22) Anmeldetag: 30.10.2012
(51) Int. Cl.: E01C 19/48, F01P 11/10, F01P 5/06, E02F 9/08

(54) **Baumaschine mit Maschinenkomponenten**
Construction machine with machine component
Engin avec composants de machine

(43) Veröffentlichungstag der Anmeldung: 07.05.2014
(73) Patentinhaber: Joseph Vögele AG, 67067 Ludwigshafen (DE)
(72) Erfinder: Herzberg, Ingo, 74918 Angelbachtal (DE); Schmidt, Thomas, 68723 Plankstadt (DE); Buschmann, Martin, 67435 Neustadt (DE)
(74) Vertreter: Grünecker Patent- und Rechtsanwälte PartG mbB

(56) Entgegenhaltungen:
- EP-A1- 2 053 167
- EP-A1- 2 357 150
- EP-A2- 1 775 392
- EP-A2- 2 256 258
- WO-A1-2008/026386
- WO-A2-2012/062384
- WO-A2-2012/135821
- DE-A1-102005 057 308
- DE-A1-102008 022 887
- JP-A- 2000 192 816
- JP-A- 2000 257 429
- JP-A- 2004 239 211
- JP-A- 2010 174 480
- US-A1- 2001 045 761

## Beschreibung

### I

Die Erfindung bezieht sich auf eine Baumaschine mit einem Antrieb und einer Maschinenkomponente gemäß dem Oberbegriff des Anspruchs 1.

Aus der Praxis ist bekannt, Komponenten einer Baumaschine in Gehäusen anzuordnen. Sie werden vorgesehen, um die jeweilige darin aufgenommene Komponente vor Umwelteinflüssen zu schützen. Konventionelle Gehäuse schützen ihren Inhalt dabei vor allem vor dem Eindringen von Staub, Schmutz, Wasser sowie anderen Flüssigkeiten oder aber Gegenständen, die den Inhalt mechanisch beschädigen können. Beispielhaft seien hier die EP 2 397 611 A1, JP 2007-063876 A, JP 2004-225429 A, JP 2004-351967 A, JP 2000-096609 A und die JP 2003-013469 A genannt, die allesamt Gehäuse für elektrische oder elektronische Komponenten für Baumaschinen offenbaren. Ein weiteres Beispiel stellt die US 2003/127137 A1 dar. In ihr wird ein Gehäuse für Hydraulikkomponenten eines Schneepflugs offenbart. Aus der WO 2012 062 384 A2 ist eine Bohleneinheit für einen Straßenfertiger bekannt. Im Inneren der Bohleneinheit angeordnete Heizelemente sind mittels durch einen Luftschacht einströmende Kühlluft kühlbar.

Insbesondere im Fall von Elektronik- und Elektrikkomponenten werden die Gehäuse häufig im Bereich des Fahrerstandes angeordnet, um dem Fahrer beziehungsweise Bediener einen einfachen Zugriff zu ermöglichen. Bei manchen Baumaschinen, zum Beispiel Straßenfertigern, befindet sich der Fahrerstand in der Nähe des Primärantriebs der Baumaschine, sodass es passieren kann, dass das Gehäuse und die in ihm aufgenommene Maschinenkomponente der Abwärme des Primärantriebs ausgesetzt sind. Dies kann insbesondere bei hitzeempfindlichen Maschinenkomponenten und bei hohen Umgebungstemperaturen auf der Baustelle zu Problemen führen.

Vor dem Hintergrund, dass Baumaschinen zunehmend in heißeren Regionen der Erde eingesetzt werden und den dortigen Umgebungsbedingungen standhalten müssen, ist die Aufgabe der vorliegenden Erfindung daher, auch bei hohen Umgebungstemperaturen einen reibungslosen Betrieb der Baumaschine zu gewährleisten.

Diese Aufgabe wird gelöst durch eine Baumaschine mit den Merkmalen des Anspruchs 1. Vorteilhafte Weiterbildungen sind in den Unteransprüchen gegeben.

Die erfindungsgemäße Baumaschine zeichnet sich dadurch aus, dass mindestens eine derjenigen Maschinenkomponenten, die im Bereich des Primärantriebs angeordnet sind, von einem Gehäuse aufgenommen wird, das mindestens einen Strömungskanal umfasst, durch den mittels Unterdruck Umgebungsluft saugbar ist, sodass ein Luftstrom entsteht. Dadurch wird Wärme aus dem Inneren des Gehäuses abgeführt und der Inhalt des Gehäuses vor Überhitzung geschützt. Eine Anordnung im Bereich des Primärantriebs ist im Sinne der Erfindung gegeben, wenn die Maschinenkomponente direkt angrenzend an denselben positioniert ist oder sich in einem Bereich befindet, in dem sie von der Abwärme des Primärantriebs beeinflusst wird. Bei der mindestens einen Maschinenkomponente kann es sich dabei um elektrische oder elektronische Komponenten, Hydraulikkomponenten, Tanks oder aber beliebige andere Komponenten handeln. Darüber hinaus kann das Gehäuse fest verschlossen sein oder aber Einrichtungen aufweisen, die dem Bediener ein einfaches Öffnen erlauben, wie zum Beispiel einen oder mehrere Deckel, Klappen, Türen oder Ähnliches. Bei dem Primärantrieb kann es sich beispielsweise um einen Verbrennungsmotor handeln.

Vorteilhaft ist es, wenn der den Luftstrom verursachende Druckunterschied durch einen Ventilator erzeugt wird. Der Ventilator kann dabei direkt in oder an dem Strömungskanal angeordnet sein, oder aber in einer Leitung, die für die Zu- beziehungsweise Abführung der Luft zu beziehungsweise von dem Gehäuse fort vorgesehen ist. Bei der Leitung kann es sich beispielsweise um ein Rohr oder einen Schlauch handeln.

Der den Luftstrom verursachende Druckunterschied wird durch eine Kühlvorrichtung des Primärantriebs erzeugt. Auf diese Weise kann unter Umständen auf einen zusätzlichen Ventilator verzichtet werden.

Der Luftstrom ist, zum Beispiel in seiner Strömungsgeschwindigkeit, variabel einstellbar. Dadurch kann er je nach Bedarf an die vorherrschenden Bedingungen angepasst werden. Dies kann manuell durch Bedienereingaben geschehen oder aber automatisch, beispielsweise anhand von durch Sensoren gemessenen Parametern.

Vorteilhaft ist es, wenn der Luftstrom abhängig von der Temperatur der jeweiligen im Gehäuse aufgenommenen Maschinenkomponente oder aber abhängig von der Temperatur des Primärantriebs regelbar ist. Dabei können auch sowohl die Temperatur der jeweiligen Maschinenkomponente, als auch die Temperatur des Primärantriebs gleichzeitig in den Regelungsprozess einfließen. Dies erleichtert die Arbeit des Bedienpersonals und stellt zudem jederzeit sicher, dass die Temperatur der Maschinenkomponente nicht unerwünscht ansteigt.

Außerdem ist es denkbar, dass sich von einer Wand des Strömungskanals Kühlrippen in den Strömungskanal hinein erstrecken. Dies würde eine weitere Verbesserung des Wärmetransports von der Komponente in den Strömungskanal ermöglichen. Außerdem kann dadurch gegebenenfalls der durch den Strömungskanal strömende Luftstrom gezielt umgeleitet werden.

Zweckmäßig kann es ferner sein, in dem Strömungskanal einen Wärmetauscher anzuordnen, der Wärme aus dem Innenraum des Gehäuses abführt. So könnten auch Komponenten mit besonders hohem Kühlbedarf vor Überhitzung geschützt werden. Außerdem könnte gegebenenfalls eine Wärmepumpe vorgesehen werden.

In einer weiteren vorteilhaften Variante ist der Strömungskanal derart geformt, dass bei seiner Durchströmung ein turbulenter oder aber ein laminarer Luftstrom entsteht. Dies kann ebenfalls den Wärmetransport, aber auch andere Faktoren, wie zum Beispiel die Geräuschentwicklung oder aber den im Raum entstehenden Luftdruck, vorteilhaft beeinflussen.

Besonders günstig ist es, wenn ein Lufteinlass und ein Luftauslass an gegenüberliegenden Seiten des Strömungskanals beziehungsweise des Gehäuses angeordnet sind. Dadurch wird gewährleistet, dass ein möglichst großer Bereich der Innenwand des Strömungskanals von dem Luftstrom überströmt wird, was einen verbesserten Wärmeaustausch zur Folge hat. Ein gleichwertiges Resultat lässt sich auch bei nebeneinander angeordnetem Lufteinlass und Luftauslass erzielen, indem die durchströmte Strecke zwischen den beiden durch einen langen Strömungskanal verlängert wird.

Der Strömungskanal ist als Doppelwand ausgebildet ist. Es sind diejenigen Wandungselemente des Gehäuses als Doppelwand ausgeführt sind, die dem Primärantrieb zugewandt sind. Auf diese Weise gelangt die Abwärme des Primärantriebs erst gar nicht in den Innenraum des Gehäuses. Dadurch ergibt sich ein zusätzlicher Überhitzungsschutz für die Komponente in dem Gehäuse.

Zweckmäßig ist es außerdem, wenn die Wärmeleitfähigkeit einer Innenwand des Gehäuses höher ist als die Wärmeleitfähigkeit einer Außenwand. Dadurch wird der Wärmetransport vom Innenraum des Gehäuses in den von der Doppelwand definierten Strömungskanal verbessert, während der Wärmetransport von außen in den selben Strömungskanal verringert wird. Auf diese Weise wird sichergestellt, dass ein möglichst großer Anteil der durch den Luftstrom abtransportierten Wärme der in dem Gehäuse aufgenommenen Maschinenkomponente entzogen wird. Dies kann durch verschiedene Maßnahmen erreicht werden. Beispielsweise könnten für die Innen- und Außenwand jeweils unterschiedliche Werkstoffe mit verschiedenen Wärmeleitfähigkeiten vorgesehen werden. Außerdem sind unterschiedliche Wanddicken, diverse Arten der Wärmedämmung, mehrschichtige Wände oder Ähnliches denkbar.

Es sind ausschließlich solche Wandungselemente doppelwandig ausgeführt sind, die dem Primärantrieb zugewandt sind. Bei eingeschränkten Platzverhältnissen kann so Bauraum gespart werden.

In einer nicht zur Erfindung gehörigen Variante können hingegen sämtliche Wandungselemente des Gehäuses doppelwandig ausgeführt sein. Dadurch wird die in dem Gehäuse aufgenommene Maschinenkomponente von allen Seiten vor thermischer Belastung geschützt.

Besonders günstig ist es, wenn das Gehäuse an seinen Befestigungseinrichtungen gegenüber zum Beispiel einem Maschinenrahmen oder Motorgehäuse thermisch entkoppelt ist. Auf diese Weise können Wärmebrücken, die dem Kühleffekt entgegen wirken, eliminiert werden.

Bei der Baumaschine handelt es sich um einen Straßenfertiger oder einen Beschicker.

Im Folgenden wird ein vorteilhaftes Ausführungsbeispiel der Erfindung anhand von Zeichnungen näher erläutert.
- Figur 1: zeigt eine perspektivische Ansicht einer Baumaschine, in diesem Beispiel eines Straßenfertigers. Es kann sich jedoch bei der Erfindung auch um eine andere Baumaschine handeln.
- Figur 2: zeigt eine schematische Ansicht eines Primärantriebs der Baumaschine aus Figur 1, einer Kühlvorrichtung des Primärantriebs sowie eines Gehäuses zur Aufnahme einer Maschinenkomponente.
- Figur 3: zeigt eine schematische Schnittansicht eines Gehäuses für eine Maschinenkomponente gemäß einem Ausführungsbeispiel der Erfindung.
- Figur 4: zeigt eine schematische Schnittansicht eines Gehäuses zur Aufnahme einer Maschinenkomponente gemäß eines nicht zur Erfindung gehörigen Beispiels.
- Figur 5: zeigt eine schematische Schnittansicht eines Gehäuses für eine Maschinenkomponente gemäß eines nicht zur Erfindung gehörigen Beispiels.
- Figur 6: zeigt eine schematische Schnittansicht eines Gehäuses für eine Maschinenkomponente gemäß einer weiteren Ausführungsform der Erfindung.

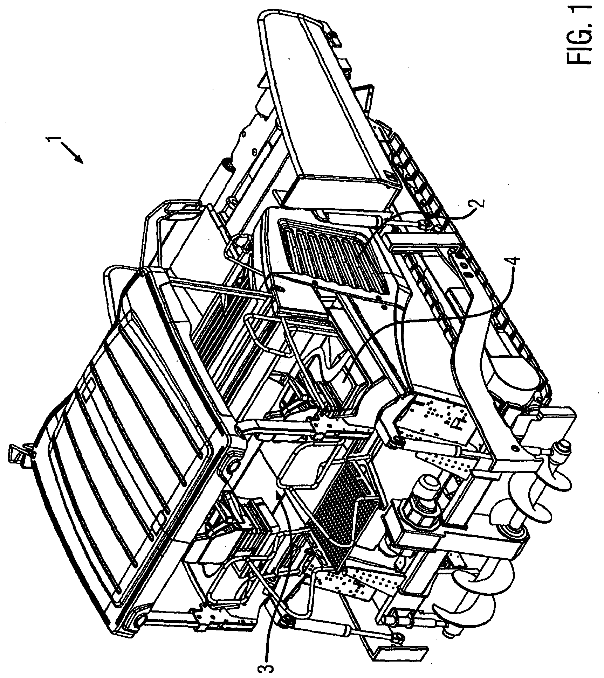

In Figur 1 ist eine Baumaschine 1, in diesem Fall ein Straßenfertiger, mit einem Primärantrieb 2 abgebildet, der sich in diesem Fall hinter einem mit Kühlschlitzen versehenen Karosserieteil befindet. Oberhalb des Primärantriebs 2 ist ein Fahrerstand 3 angeordnet, in dessen Boden eine Maschinenkomponente 4 eingelassen ist. Dieser Einbauort steht stellvertretend für sämtliche Einbauorte von Maschinenkomponenten, die sich im Bereich des Primärantriebs befinden, d. h. die der Abwärme des Primärantriebs ausgesetzt sind.

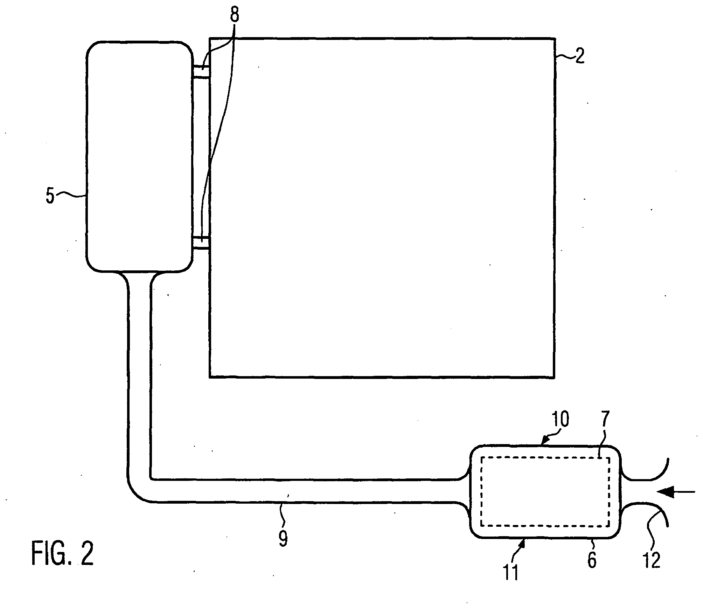

Figur 2 stellt die Anordnung eines Primärantriebs 2 der Baumaschine 1, einer Kühlvorrichtung 5 des Primärantriebs 2 sowie eines Gehäuses 6 zur Aufnahme einer Maschinenkomponente 7 relativ zueinander schematisch dar. Bei der Maschinenkomponente 7 kann es sich dabei um eine oder mehrere elektrische oder elektronische Komponenten, hydraulische Komponenten, einen Tank oder aber beliebige andere Komponenten handeln. Die Kühlvorrichtung 5 ist in diesem Ausführungsbeispiel direkt neben dem Primärantrieb 2 angeordnet. Sie kann jedoch auch weiter von ihm entfernt vorgesehen und durch Kühlleitungen 8 mit ihm verbunden sein. Das Gehäuse 6 und die darin aufgenommene Maschinenkomponente 7 sind im Bereich des meist als Verbrennungsmotor ausgebildeten Primärantriebs 2 angeordnet. Das bedeutet, sie befinden sich entweder direkt angrenzend an den Primärantrieb 2 oder aber in einem Bereich, in dem sie durch die Abwärme des Primärantriebs 2 beeinflusst werden. Die Kühlvorrichtung 5 und das Gehäuse 6 sind durch einen Schlauch 9 miteinander verbunden. Alternativ zu einem Schlauch kann auch ein Rohr oder ein beliebiges anderes Leitungselement verwendet werden.

Das Gehäuse 6 setzt sich aus verschiedenen Wandungselementen zusammen. Dabei befindet sich das Wandungselement 10 auf der dem Primärantrieb 2 zugewandten Seite des Gehäuses 6 und das Wandungselement 11 auf der vom Primärantrieb 2 abgewandten Seite des Gehäuses. An dem Gehäuse 6 ist ein Lufteinlass 12 vorgesehen, durch den entweder direkt oder über weitere Leitungselemente (nicht dargestellt) Luft angesaugt werden kann. Der dazu notwendige Druckunterschied wird im dargestellten Ausführungsbeispiel von der Kühlvorrichtung 5 erzeugt. Es kann aber auch ein Ventilator oder eine andere beliebige Einrichtung dafür verwendet werden.

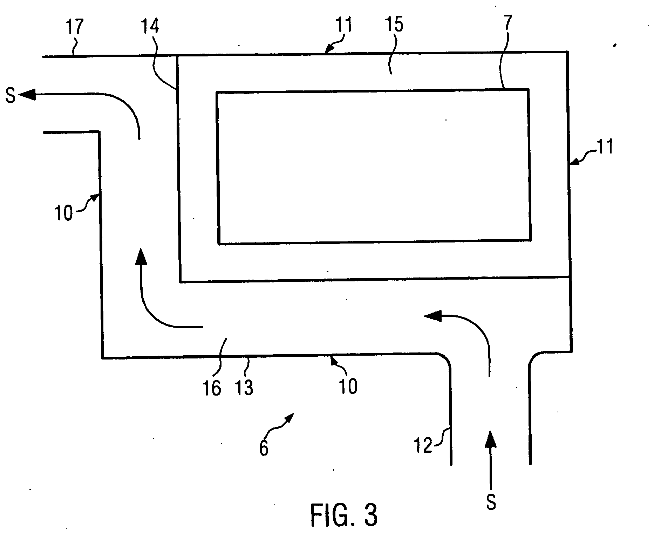

In Figur 3 ist eine Schnittdarstellung des Gehäuses 6 gemäß eines ersten Ausführungsbeispiel der Baumaschine 1 zu sehen. Die dem Primärantrieb 2 zugewandten Wandungselemente 10 sind doppelwandig ausgeführt, d. h. sie umfassen eine Außenwand 13 sowie eine Innenwand 14. Die Innenwand 14 definiert dabei einen Innenraum 15, der die Maschinenkomponente 7 aufnimmt. Ein Strömungskanal 16 wird durch die Innenwand 14 und die Außenwand 13 definiert. Die vom Primärantrieb abgewandten Wandungselmente 11 sind in diesem Ausführungsbeispiel nur einwandig ausgeführt.

Durch den Lufteinlass 12 wird Umgebungsluft in einem Luftstrom S angesaugt. Der Luftstrom S strömt durch den Strömungskanal 16 an der Innenwand 14 vorbei, nimmt dort Wärme auf und verlässt den Strömungskanal 16 durch den Luftauslass 17. Der Lufteinlass 12 und der Luftauslass 17 sind in diesem Ausführungsbeispiel möglichst weit voneinander entfernt an der Außenwand 13 angeordnet. Dadurch wird gewährleistet, dass der Luftstrom S eine möglichst große Fläche der Innenwand 14 überströmt.

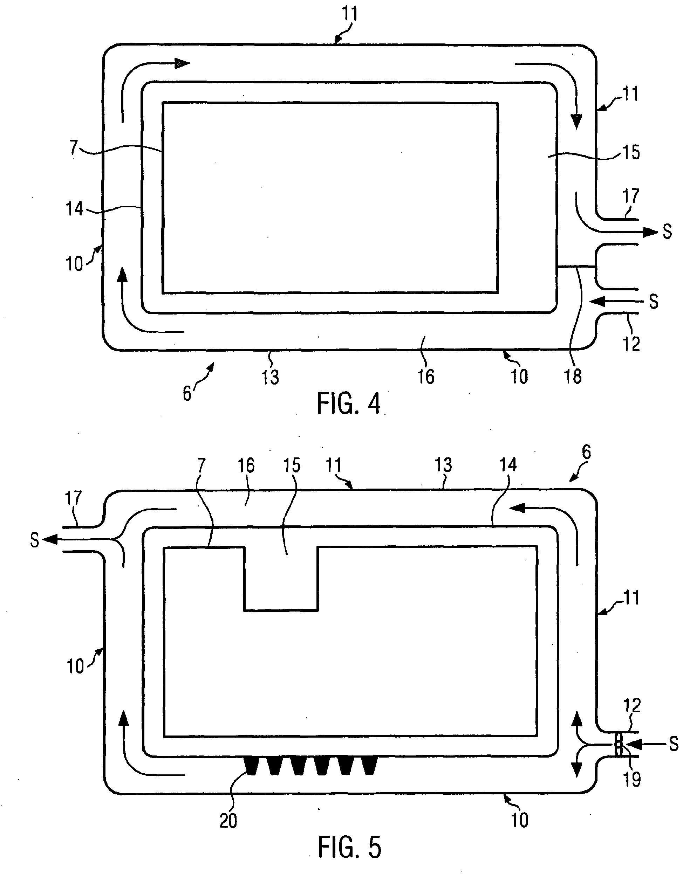

Figur 4 zeigt das Gehäuse 6 gemäß eines nicht zu Erfindung gehörigen Beispiels. Hier sind der Lufteinlass 12 und der Luftauslass 17 direkt nebeneinander angeordnet. Durch eine Trennwand 18 wird gewährleistet, dass der Luftstrom S nicht auf dem kürzesten Weg vom Lufteinlass 12 zum Luftauslass 17 verläuft, sondern den gesamten Strömungskanal, 16 durchströmt, dabei möglichst viel Wärme von der Innenwand 14 aufnimmt und den Strömungskanal 16 dann durch den Luftauslass 17 wieder verlässt. Darüber hinaus sind in diesem Ausführungsbeispiel sämtliche Wandungselemente 10, 11 doppelwandig ausgeführt.

In dem in Figur 5 gezeigten Beispiel, das nicht Teil der Erfindung ist, sind ebenfalls sämtliche Wandungselemente 10, 11 doppelwandig ausgeführt. Hier ist keine Trennwand 18 vorgesehen. Stattdessen sind der Lufteinlass 12 und der Luftauslass 17 an gegenüberliegenden Seiten des Gehäuses 6 beziehungsweise des Strömungskanals 16 angeordnet. So wird wiederum gewährleistet, dass der Luftstrom S einen möglichst großen Teil der Innenwand 14 überströmt. In diesem Ausführungsbeispiel ist zur Erzeugung des für den Luftstrom S benötigten Druckunterschieds ein Ventilator 19 vorgesehen. Ein Ventilator 19 kann in sämtlichen Ausführungsbeispielen eingesetzt werden.

In einer weiteren Variante kann der Luftstrom S variabel einstellbar sein. Dies kann manuell oder automatisiert erfolgen. Für den Fall, dass der für den Luftstrom S erforderliche Druckunterschied durch einen Ventilator 19 erzeugt wird, kann die Einstellung des Luftstroms durch eine Anpassung der Drehzahl des Ventilators 19 erreicht werden. Alternativ dazu können steuerbare Ventile eingesetzt werden. Letzteres wäre die bevorzugte Variante, um eine Einstellbarkeit zu gewährleisten, wenn der für den Luftstrom S erforderliche Unterdruck ausschließlich durch die Kühlvorrichtung 5 des Primärantriebs 2 erzeugt wird. Solche Steuerventile könnten, genauso wie der Ventilator, an einem beliebigen Ort, der von dem Luftstrom S durchströmt wird, vorgesehen sein, wie zum Beispiel dem Strömungskanal 16, dem Lufteinlass 12, dem Luftauslass 17, dem Leitungselement 9 oder aber einem gegebenenfalls am Lufteinlass 12 angeschlossenen weiteren Leitungselement. Die Regelung der Ventilatordrehzahl oder aber der Ventilöffnungszeiten (duty cycle) kann in einer weiteren Variante automatisiert regelbar sein. Eingangsgrößen können dabei beispielsweise die Temperatur der Maschinenkomponente 7, die Temperatur des Primärantriebs 2 oder aber beides sein.

Eine weitere Modifikation kann vorsehen, dass sich von der Innenwand 14 aus Kühlrippen 20 in den Strömungskanal 16 erstrecken. Dadurch würde einerseits die Wärmeabfuhr aus dem Innenraum 15 verbessert und andererseits könnte der Luftstrom S durch solche Kühlrippen gezielt beeinflusst werden.

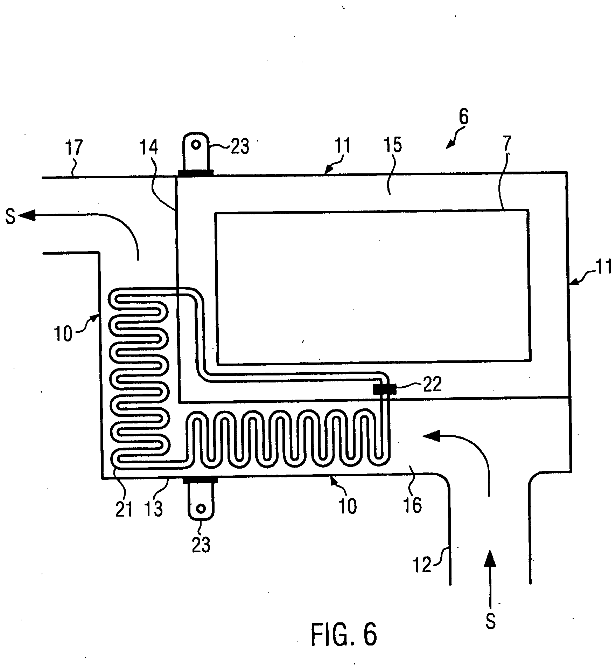

In einer weiteren Variante kann, wie aus Figur 6 ersichtlich, ein Wärmetauscher 21 in dem Strömungskanal 16 vorgesehen werden, der mit Hilfe eines Mediums Wärme aus dem Innenraum 15 in den Strömungskanal 16 transportiert. Bei einer solchen Variante könnte für Maschinenkomponenten 7 mit einem besonders hohen Kühlbedarf auch eine Wärmepumpe 22 vorgesehen werden.

Der Strömungskanal 16 könnte in einer weiteren Abwandlung der Erfindung so geformt sein, dass ein turbulenter oder aber ein laminarer Luftstrom S entsteht. Auf diese Weise könnten sowohl der Wärmetransport als auch andere Faktoren, wie zum Beispiel die Geräuschentwicklung oder aber der Druck im Strömungskanal 16, beeinflusst werden.

In einer weiteren Variante kann die Wärmeleitfähigkeit der Innenwand 14 höher sein als die Wärmeleitfähigkeit der Außenwand 13. Dadurch wäre gewährleistet, dass möglichst wenig Wärme vom Primärantrieb in den Strömungskanal 16 gelangt, aber möglichst viel Wärme aus dem Innenraum 15 des Gehäuses in den Strömungskanal 16 abgeführt wird. Beispielsweise könnten für die Innen- und Außenwand jeweils unterschiedliche Werkstoffe mit verschiedenen Wärmeleitfähigkeiten vorgesehen werden. Außerdem sind unterschiedliche Wanddicken, diverse Arten der Wärmedämmung, mehrschichtige Wände oder Ähnliches denkbar.

Zusätzlich könnte, wie aus Figur 6 ersichtlich, das Gehäuse 6 in einer weiteren Variante an Befestigungseinrichtungen 23, mit deren Hilfe das Gehäuse 6 an oder in der Baumaschine 1 befestigt ist, thermisch entkoppelt sein. Unerwünschte Wärmebrücken würden so vermieden.

Die beschriebenen Ausführungsbeispiele stellen den Strömungskanal 16 als Doppelwand dar. Er kann jedoch in nicht erfindungsgemäßen Varianten in einer beliebeigen Art oder Form durch oder in dem Innenraum 15 des Gehäuses 6 verlaufen. So kann beispielsweise ein möglichst langer Strömungsweg vorgesehen werden, der möglichst viele Bereiche des Innenraums erreicht. Denkbar ist außerdem ein spiral- oder wellenförmiger Verlauf des Strömungskanals 16. Dieser kann zudem an verschiedenen Stellen Öffnungen aufweisen, die es ermöglichen, dass die kühlende Umgebungsluft die Maschinenkomponente 7 oder Teile davon direkt überströmt.

Der Strömungskanal 16 kann jeden beliebigen, geeigneten Querschnitt aufweisen, zum Beispiel kreisförmig, elliptisch, quadratisch oder aber rechteckig.

Die Baumaschine 1 ist ein Straßenfertiger oder ein Beschicker.

## Patentansprüche

1. Straßenfertiger (1) oder Beschicker, umfassend:
einen Abwärme verursachenden Primärantrieb (2),
eine Kühlvorrichtung (5) des Primärantriebs (2) und
eine oder mehrere Maschinenkomponenten (7), wobei mindestens eine der Maschinenkomponenten (7) in einem Gehäuse (6) angeordnet ist,
wobei das Gehäuse (6) mindestens einen Strömungskanal (16) umfasst, durch den Umgebungsluft saugbar ist, sodass ein Luftstrom (S) entsteht, der automatisiert variabel einstellbar ist, wobei Wandungselemente (10, 11) des Gehäuses (6) doppelwandig ausgeführt sind, wodurch die Wandungselemente (10, 11) eine Innenwand (14) und eine Außenwand (13) aufweisen, die den Strömungskanal definieren, wobei die Innenwand (14) einen Innenraum (15) definiert, der die Maschinenkomponente (7) aufnimmt,
**dadurch gekennzeichnet, dass** die eine oder mehrere Maschinenkomponenten (7) im Bereich des Primärantriebs (2) angeordnet sind,
dass ausschließlich jene Wandungselemente (10) doppelwandig ausgeführt sind, die dem Primärantrieb (2) zugewandt sind, und
dass die Umgebungsluft mittels Unterdruck durch den Strömungskanal (S) saugbar ist, wobei für die Erzeugung des den Luftstrom (S) verursachenden Druckunterschieds die Kühlvorrichtung (5) des Primärantriebs (2) vorgesehen ist.

2. Straßenfertiger oder Beschicker nach Anspruch 1, **dadurch gekennzeichnet, dass** für die Erzeugung des den Luftstrom (S) verursachenden Druckunterschieds ein Ventilator (19) vorgesehen ist.

3. Straßenfertiger oder Beschicker nach einem der vorangehenden Ansprüche, **dadurch gekennzeichnet, dass** der Luftstrom (S) abhängig von der Temperatur der jeweiligen Maschinenkomponente (7) und/oder abhängig von der Temperatur des Primärantriebs (2) regelbar ist.

4. Straßenfertiger oder Beschicker nach einem der vorangehenden Ansprüche, **dadurch gekennzeichnet, dass** sich von einer Wand des Strömungskanals (16) aus Kühlrippen (20) in den Strömungskanal (16) hinein erstrecken.

5. Straßenfertiger oder Beschicker nach einem der vorangehenden Ansprüche, **dadurch gekennzeichnet, dass** in dem Strömungskanal (16) ein Wärmetauscher (21) angeordnet ist, der Wärme aus dem Innenraum (15) des Gehäuses (6) abführt.

6. Straßenfertiger oder Beschicker nach einem der vorangehenden Ansprüche, **dadurch gekennzeichnet, dass** der Strömungskanal (16) derart geformt ist, dass bei seiner Durchströmung ein turbulenter oder aber ein laminarer Luftstrom (S) entsteht.

7. Straßenfertiger oder Beschicker nach einem der vorangehenden Ansprüche, **dadurch gekennzeichnet, dass** ein Lufteinlass (12) und ein Luftauslass (17) an gegenüberliegenden Seiten des Strömungskanals (16) angeordnet sind.

8. Straßenfertiger oder Beschicker nach einem der vorangehenden Ansprüche, **dadurch gekennzeichnet, dass** die Wärmeleitfähigkeit der Innenwand (14) höher ist als die Wärmeleitfähigkeit der Außenwand (13).

9. Straßenfertiger oder Beschicker nach einem der vorangehenden Ansprüche, **dadurch gekennzeichnet, dass** das Gehäuse (6) an Befestigungseinrichtungen (23) thermisch entkoppelt ist.

## Claims

1. A road finisher (1) or a feeder comprising:
a primary drive (2) generating waste heat,
a cooling device (5) of the primary drive (2) and
one or a plurality of machine components (7), wherein at least one of the machine components (7) is arranged in a housing (6),
wherein the housing (6) includes at least one flow passage (16), through which ambient air can be sucked so that an air current (S) is created, which is variably adjustable automatically, wherein wall elements (10, 11) of the housing (6) are configured as double-walled elements, the wall elements (10, 11) thereby comprising an inner wall (14) and an outer wall (13) defining the flow passage, wherein the inner wall (14) defines an internal space (15) that accommodates the machine component (7)
**characterized in that** the one or the plurality of machine components (7) are arranged in the area of the primary drive (2),
that only the wall elements (10) facing the primary drive (2) are configured as double-walled elements, and
that the ambient air can be sucked through the flow passage (16) using underpressure, wherein the cooling device (5) of the primary drive (2) is provided for generating the pressure difference that creates the air current (S).

2. Road finisher or feeder according to claim 1, **characterized in that** a fan (19) is provided for generating the pressure difference that creates the air current (S).

3. Road finisher or feeder according to one of the preceding claims, **characterized in that** the air current (S) is controllable depending on the temperature of the respective machine component (7) and/or depending on the temperature of the primary drive (2).

4. Road finisher or feeder according to one of the preceding claims, **characterized in that** cooling fins (20) extend from a wall of the flow passage (16) into the flow passage (16).

5. Road finisher or feeder according to one of the preceding claims, **characterized in that** a heat exchanger (21), which conducts heat out of the internal space (15) of the housing (6), is arranged in the flow passage (16).

6. Road finisher or feeder according to one of the preceding claims, **characterized in that** the flow passage (16) is shaped such that when air flows therethrough a turbulent or a laminar air current (S) will be created.

7. Road finisher or feeder according to one of the preceding claims, **characterized in that** an air inlet (12) and an air outlet (17) are arranged on opposite sides of the flow passage (16).

8. Road finisher or feeder according to one of the preceding claims, **characterized in that** the thermal conductivity of the inner wall (14) is higher than the thermal conductivity of the outer wall (13).

9. Road finisher or feeder according to one of the preceding claims, **characterized in that** the housing (6) is thermally decoupled at fastening units (23).

## Revendications

1. Finisseur de route (1) ou alimentateur, comprenant:
un entraînement primaire (2) provoquant une perte de chaleur,
un dispositif de refroidissement (5) de l'entraînement primaire (2) et
un ou plusieurs composants de machine (7), dans lequel au moins un des composants de machine (7) est disposé dans un boîtier (6),
le boîtier (6) présente au moins un canal d'écoulement (16) par lequel l'air ambiant peut être aspiré, de sorte qu'il se forme un courant d'air (S) qui peut être réglé de manière variable et automatisée, des éléments de paroi (10, 11) du boîtier (6) étant réalisés à double paroi, les éléments de paroi (10, 11) présentant une paroi intérieure (14) et une paroi extérieure (13) qui définissent le canal d'écoulement, la paroi intérieure (14) définissant un espace intérieur (15) qui reçoit le composant (7) de la machine,
**caractérisé en ce que** le ou les composants de la machine (7) sont disposés dans la région de l'entraînement primaire (2),
**en ce que** seuls les éléments de paroi (10) qui font face à l'entraînement primaire (2) sont à double paroi, et
**en ce que** l'air ambiant peut être aspiré par le canal d'écoulement (S) au moyen d'une suppression, le dispositif de refroidissement (5) de l'entraînement primaire (2) étant prévu pour générer la différence de pression provoquant le flux d'air (S).

2. Finisseur ou alimentateur de route selon la revendication 1, **caractérisés en ce qu'**un ventilateur (19) est prévu pour générer la différence de pression provoquant le flux d'air (S).

3. Finisseur ou alimentateur de route selon l'une des revendications précédentes, **caractérisés en ce que** le flux d'air (S) peut être commandé en fonction de la température de l'élément de machine (7) respectif et/ou en fonction de la température de l'entraînement primaire (2).

4. Finisseur ou alimentateur de route selon l'une des revendications précédentes, **caractérisés en ce que** des ailettes de refroidissement (20) s'étendent depuis une paroi du canal d'écoulement (16) dans le canal d'écoulement (16).

5. Finisseur ou alimentateur de route selon l'une des revendications précédentes, **caractérisés en ce qu'**un échangeur de chaleur (21) est disposé dans le canal d'écoulement (16), lequel échangeur de chaleur (21) dissipe la chaleur de l'intérieur (15) du boîtier (6).

6. Finisseur ou alimentateur de route selon l'une des revendications précédentes, **caractérisés en ce que** le canal d'écoulement (16) est formé de telle manière qu'un flux d'air turbulent ou laminaire (S) est créé lorsqu'il le traverse.

7. Finisseur ou un alimentateur de route selon l'une des revendications précédentes, **caractérisés en ce qu'**une entrée d'air (12) et une sortie d'air (17) sont disposées sur les côtés opposés du canal d'écoulement (16).

8. Finisseur ou un alimentateur selon l'une des revendications précédentes, **caractérisés en ce que** la conductivité thermique de la paroi intérieure (14) est supérieure à la conductivité thermique de la paroi extérieure (13).

9. Finisseur ou alimentateur de route selon l'une des revendications précédentes, **caractérisés en ce que** le boîtier (6) est découplé thermiquement au niveau des moyens de fixation (23).
